# EUROPÄISCHE PATENTSCHRIFT

(11) **EP 1 201 944 B1**
(45) Veröffentlichungstag und Bekanntmachung des Hinweises auf die Patenterteilung: **31.12.2008**
(21) Anmeldenummer: 01810996.7
(22) Anmeldetag: 12.10.2001
(51) Int. Cl.: F16B 37/12, F16B 21/20

(54) **Verbindungselement**
Connector
Elément de connexion

(30) Priorität: 23.10.2000 DE 10052578
(43) Veröffentlichungstag der Anmeldung: 02.05.2002
(73) Patentinhaber: HILTI Aktiengesellschaft, 9494 Schaan (LI)
(72) Erfinder: Hermann, Fritz, 86899 Landsberg (DE); Birnbaum, Ulrich, 86916 Kaufering (DE)
(74) Vertreter: Wildi, Roland

(56) Entgegenhaltungen:
- EP-A- 0 315 941
- EP-A- 0 423 657
- EP-A- 1 130 274
- US-A- 3 934 315

## Beschreibung

Die Erfindung betrifft ein Verbindungselement mit einem Aufnahmeteil für einen Bolzen mit einem Aussengewinde, das mit einer Bohrung versehen ist, in der wenigstens ein Verriegelungselement angeordnet ist, das zumindest teilweise formschlüssig in das Aussengewinde des Bolzens eingreift, wobei die Bohrung im Aufnahmeteil einen zylindrischen Aufnahmebereich aufweist und das Aufnahmeteil in Aufnahmerichtung des Bolzens an den Aufnahme bereich anschliessend einen Führungsbereich aufweist und wobei das Verriegelungselement von einem, in Aufnahmerichtung des Bolzens abstützenden radial aufweitbaren Ringkörper gebildet ist, dessen lichte Weite zumindest teilweise kleiner ist als der Aussendurchmesser der Gewindestange und dessen axiale Länge etwa der Länge des Aufnahmebereichs entspricht.

Eine der am häufigsten eingesetzten Verbindungstechniken von zwei oder mehreren Teilen stellt die Schraubverbindung dar. Dazu wird üblicherweise ein mit einem Aussengewinde versehener Schraubbolzen mit einer Mutter verbunden, an der ein korrespondierendes Innengewinde ausgebildet ist. Die zu verbindenden Teile können mit dem Schraubbolzen oder der Mutter verbunden sein. Oft bildet der Schraubbolzen auch einen Bestandteil eines der Teile. Das zweite Teil ist dann meist mit einer Bohrung versehen, durch die der Schraubbolzen gesteckt wird. Danach wird die Mutter auf das Aussengewinde des Schraubbolzens aufgeschraubt. Es kann auch die Mutter als Bestandteil eines der Teile vorliegen. Dann wird in die Mutter der Schraubbolzen eingedreht, der beispielsweise durch eine Bohrung im zweiten Teil gesteckt ist. Der Schraubbolzen kann beispielsweise auch eine Gewindestange sein, die mit einer Halterung für Rohre verbunden ist.

Bekannt sind Lösungen, bei denen ein aufweitbarer Ringkörper in das Aussengewinde des Bolzens greift. Dadurch ist eine einfache und schnelle Verbindung zweier Elemente möglich.

Nachteilig an der bekannten Lösung ist jedoch, dass das bekannte Verbindungselement nur ein sehr geringes Drehmoment übertragen kann. Ist das Verbindungselement beispielsweise an einer Rohrschelle angebracht, um eine Verbindung zu einer Gewindestange sicherzustellen muss diese mittels eines durch Drehen verspreizbaren Dübels an einem Untergrund befestigt sein. In diesem Fall ist ein Drehen der Rohrschelle nicht zielführend, da das Drehmoment durch das bekannte Verbindungselement nur unzureichend übertragen wird.

Aus der nachveröffentlichten EP 1 130 274 A1 ist Verbindungselement mit einem Aufnahmeteil für einen Bolzen mit einem Aussengewinde bekannt, das mit einer Bohrung versehen ist, in der wenigstens ein Verriegelungselement angeordnet ist, das zumindest teilweise formschlüssig in das Aussengewinde des Bolzens eingreift. Die Bohrung weist im Aufnahmeteil einen zylindrischen Aufnahmebereich auf und das Aufnahmeteil weist in Aufnahmerichtung des Bolzens an den Aufnahmebereich anschliessend einen Führungsbereich auf. Die Bohrung verjüngt sich entgegen der Aufnahmerichtung des Bolzens an den Aufnahmebereich anschliessend wenigstens abschnittweise entgegen der Aufnahmerichtung des Bolzens. Das Verriegelungselement ist von einem in Aufnahmerichtung des Bolzen sich abstützenden, radial aufweitbaren Ringkörper gebildet, dessen lichte Weite zumindest teilweise kleiner ist, als der Aussendurchmesser des Aussengewindes und dessen axiale Länge etwa der Länge des Aufnahmebereichs entspricht.

Aus der US 3,934,315 ist ein Verbindungselement mit einem Aufnahmeteil für einen Bolzen mit einem Aussengewinde bekannt, das mit einer Bohrung versehen ist, in der wenigstens ein Verriegelungselement angeordnet ist, das zumindest teilweise formschlüssig in das Aussengewinde des Bolzens eingreift. Die Bohrung weist im Aufnahmeteil einen zylindrischen Aufnahmebereich auf und das Aufnahmeteil weist in Aufnahmerichtung des Bolzens an den Aufnahmebereich anschliessend einen Führungsbereich auf. Das Verriegelungselement ist von einem in Aufnahmerichtung des Bolzen sich abstützenden, radial aufweitbaren Ringkörper gebildet, dessen lichte Weite zumindest teilweise kleiner ist, als der Aussendurchmesser des Aussengewindes und dessen axiale Länge etwa der Länge des Aufnahmebereichs entspricht.

Der vorliegenden Erfindung liegt die Aufgabe zugrunde, ein Verbindungselement mit einem Verriegelungselement, das zumindest teilweise formschlüssig in das Aussengewinde des Bolzens eingreift, zu schaffen, welches auch die Übertragung von einem Drehmoment sicherstellt.

Erfindungsgemäss wird die Aufgabe dadurch gelöst, dass sich die Bohrung entgegen der Aufnahmerichtung des Bolzens an den Aufnahmebereich anschliessend wenigstens abschnittweise entgegen der Aufnahmerichtung des Bolzens verjüngt und der Führungsbereich mit einem Innengewinde versehen ist, das koaxial zur Bohrung angeordnet ist, wobei der Kerndurchmesser des Führungsbereichs höchstens dem Aussendurchmesser des Bolzens entspricht.

Dadurch, dass der Führungsbereich höchstens dem Aussendurchmesser des Bolzens entspricht, wird der Bolzens bei einer Drehbewegung im Aufnahmeteil festgekeilt. Der Führungsbereich wirkt somit in der Art einer Bremse und ermöglicht damit ein Einbringen eines höheren Drehmoments als bei bisher bekannten Lösungen.

Eine bevorzugte Lösung weist im Führungsbereich eine Reibeinlage auf, welche im Führungsbereich angeordnet ist und einen hohen Reibkoeffizienten aufweist. Beispielsweise kann die Reibeinlage aus Kunststoff oder einen Elastomer sein. Die Reibeinlage weist in dieser Ausführungsform das Innengewinde auf. Wirkt nun auf den Bolzen ein Drehmoment in Eindrehrichtung des Innengewindes, wirkt auf diesen eine hohe Reibkraft.

Der Führungsbereich weist vorzugsweise einen Kerndurchmesser auf, der dem Aussendurchmesser des Bolzens entspricht und in Aufnahmerichtung daran anschliessend ein Anschlag angeordnet ist. Der Anschlag kann beispielsweise durch eine Wandung des Verbindungselementes gebildet werden.

Vorzugsweise ist der Kerndurchmesser des Innengewindes kleiner als der Aussendurchmesser des Bolzens und stellt daher eine kraftschlüssige und/oder reibschlüssige Verbindung zwischen Aufnahmeteil und dem Bolzen sicher. Insbesondere bei einer Reibeinlage erhöht sich dadurch die Reibung wesentlich. Ferner wird durch diese Massnahme erreicht, dass beispielsweise Ecken und Kanten am aufnahmeseitigen Ende des Bolzens sich im Führungsbereich besonders optimal verkeilen. Insbesondere bei sogenannten Stockschrauben, welche ein konisch ausgeformtes Ende aufweisen tritt dieser Festkeilen auf.

Um eine genügend hohe Drehmomentaufnahme zu gewährleisten, weist das Innengewinde vorteilhafterweise mindestens 1,5 Gewindegänge auf.

Vorzugsweise ist das Aufnahmeteil einteilig ausgebildet, um eine wirtschaftliche Herstellung des Verbindungselementes sicherzustellen.

Vorteilhafterweise wird am aufnahmerichtungsseitigen Ende eines hülsenförmigen Aufnahmeteiles das Material der Wandung des Aufnahmeteils durch einen Bördelvorgang radial nach innen geformt und wird anschliessend durch einen Stempel axial entgegen der Aufnahmerichtung derart aufgestaucht, dass sich im Innern des Aufnahmeteils ein Führungsbereich mit geringerem Kerndurchmesser bildet, der mit einem Innengewinde versehen wird.

Die Erfindung wird nachstehend anhand eines Ausführungsbeispieles näher erläutert. Es zeigen:
- Fig. 1: ein erfindungsgemässes Verbindungselement;
- Fig. 2: das Verbindungselement der Fig. 1 mit einem Anschlag;
- Fig. 3: ein gebördeltes Aufnahmeteil des in Fig. 1 dargestellten Verbindungselementes;
- Fig. 4: das in Fig. 3 dargestellte Aufnahmeteil nach einem Prägevorgang.

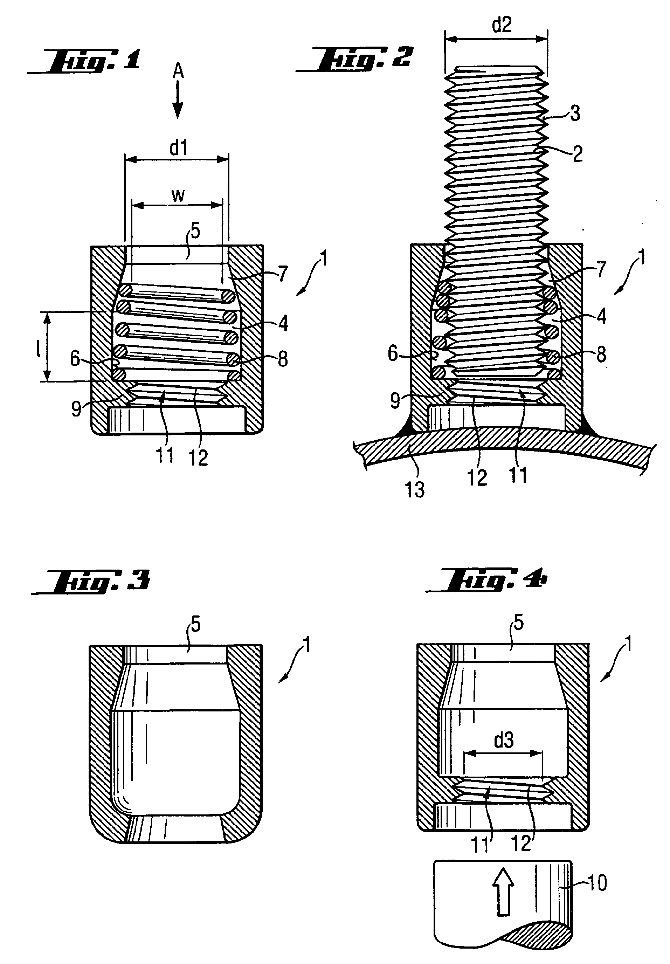

In den Fig. 1 bis 4 ist ein erfindungsgemässes Verbindungselement dargestellt, das ein Aufnahmeteil 1 und ein in einem Aufnahmebereich 4 angeordnetes als Ringkörper ausgebildetes Verriegelungselement aufweist. Das Aufnahmeteil 1 kann ein separates Bauteil sein und beispielsweise nach Art einer Mutter ausgebildet sein. Es kann auch als integraler Bestandteil eines Befestigungsteils vorliegen, beispielsweise an einer Rohrschelle zur Aufnahme einer Gewindestange.

Die Bohrung 5 im Aufnahmeteil 1 weist anschliessend an den zylindrischen Aufnahmebereich 4 entgegen einer Aufnahmerichtung A eines, mit einem Aussengewinde 3 versehenen, Bolzens 2 einen entgegen der Aufnahmerichtung A des Bolzens 2 verjüngten Bereich 7 auf. Der entgegen der Aufnahmerichtung A angeordnete Bereich der Bohrung 5 weist einen Durchmesser d1 auf, der geringfügig grösser ist als der Aussendurchmesser d2 des Bolzens 2.

Der radial elastisch aufweitbare, als kegelstumpfförmige Schraubenfeder 8 ausgebildete, Ringkörper ist in Aufnahmerichtung A durch eine ringförmig umlaufende Anschlagschulter 9 abgestützt. Entgegen der Aufnahmerichtung A stützt sich die Schraubenfeder 8 am verjüngten Bereich 7 der Bohrung 5 ab. Die Schraubenfeder 8 ist vorzugsweise aus einem Federstahl gefertigt und weist im ungespannten Zustand eine grössere Länge auf als die axiale Länge I des Aufnahmebereichs 4. Der Aussendurchmesser der Schraubenfeder 8 ist am aufnahmerichtungsseitigen Ende so bemessen, dass die sie in Kontakt mit der Wandung 6 der Bohrung 5 steht. Am gegenüberliegenden Ende ist die lichte Weite w kleiner als der Aussendurchmesser d2 des Bolzens 2.

Beim Einstecken des Bolzens 2 in die Bohrung 5 verkürzt sich die Schraubenfeder 8 und erhält damit im Aufnahmebereich 4 radial Platz sich aufzuweiten. Durch die Vorspannung der Schraubenfeder 8 bewegt sie sich über den Bolzen 2 schnappend und radial vorgespannt wieder in ihre axiale Ausgangsposition zurück. Somit ist der Bolzen 2 mit dem Aufnahmeteil 1 durch die Schraubenfeder 8, die in das Aussengewinde 3 eingreift, verbunden. Bei Zugbelastung wird die Schraubenfeder 8 gegen den, sich entgegen der Aufnahmerichtung A des Bolzens 2 verjüngenden, Bereich 7 der Bohrung 5 gedrückt und ein radiales Aufweiten und somit ein Überschnappen kann dadurch verhindert werden. Die Schraubenfeder 8 greift in das Aussengewinde 3 des Bolzens 2 und bildet eine formschlüssige Verbindung zwischen Bolzen 2 und Aufnahmeteil 1.

Bei der Herstellung des erfindungsgemässen Verbindungselementes wird am aufnahmerichtungsseitigen Ende eines hülsenförmigen Aufnahmeteiles 1, wie es insbesondere in Fig. 3 dargestellt ist, das Material der Wandung des Aufnahmeteils 1 durch einen Bördelvorgang radial nach innen geformt und anschliessend durch einen Stempel 10 axial entgegen der Aufnahmerichtung A derart aufgestaucht, dass sich im Innern des Aufnahmeteils 1 ein Führungsbereich 11 mit einem geringeren Kerndurchmesser d3 bildet als der Aussendurchmesser d2 des Bolzens 2 auf.

In der Fig. 2 entspricht der Kerndurchmesser des Innengewindes 12 dem Aussendurchmesser d2 des Bolzens 2. Um jedoch ein Durchdrehen des Bolzens 2 zu verhindern, ist anschliessend an den Führungsbereich 11 ein Anschlag 13 angeordnet. Der Anschlag 13 kann beispielsweise durch einen Rohrschellenbügel gebildet werden.

## Patentansprüche

1. Verbindungselement mit einem Aufnahmeteil (1) für einen Bolzen (2) mit einem Aussengewinde (3), das mit einer Bohrung (5) versehen ist, in der wenigstens ein Verriegelungselement (8) angeordnet ist, das zumindest teilweise formschlüssig in das Aussengewinde (3) des Bolzens (2) eingreift, wobei
die Bohrung (5) im Aufnahmeteil (1) einen zylindrischen Aufnahmebereich (4) aufweist und
das Aufnahmeteil (1) in Aufnahmerichtung (A) des Bolzens (2) an den Aufnahmebereich (4) anschliessend einen Führungsbereich (11) aufweist und wobei
das Verriegelungselement (8) von einem in Aufnahmerichtung (A) des Bolzen (2) sich abstützenden, radial aufweitbaren Ringkörper (8) gebildet ist, dessen lichte Weite (w) zumindest teilweise kleiner ist, als der Aussendurchmesser (d2) des Aussengewindes (3) und dessen axiale Länge etwa der Länge (I) des Aufnahmebereichs (4) entspricht,
**dadurch gekennzeichnet, dass**
sich die Bohrung (5) entgegen der Aufnahmerichtung (A) des Bolzens (2) an den Aufnahmebereich (4) anschliessend wenigstens abschnittweise entgegen der Aufnahmerichtung (A) des Bolzens (2) verjüngt und
der Führungsbereich (11) mit einem Innengewinde (12) versehen ist, das koaxial zur Bohrung (5) angeordnet ist, wobei der Kerndurchmesser (d3) des Führungsbereichs (11) höchstens dem Aussendurchmesser (d2) des Bolzens (2) entspricht.

2. Verbindungselement nach Anspruch 1, **dadurch gekennzeichnet, dass** der Führungsbereich (11) einen Kerndurchmesser (d3) aufweist, der dem Aussendurchmesser (d2) des Bolzens (2) entspricht und in Aufnahmerichtung (A) daran anschliessend ein Anschlag (13) angeordnet ist.

3. Verbindungselement nach Anspruch 1, **dadurch gekennzeichnet, dass** der Kerndurchmesser (d3) des Innengewindes (12) kleiner als der Aussendurchmesser (d2) des Bolzen (2) ist.

4. Verbindungselement nach Anspruch 1 oder 2, **dadurch gekennzeichnet, dass** das Innengewinde (12) mindestens 1,5 Gewindegänge aufweist.

5. Verbindungselement nach einem der Ansprüche 1 bis 4, **dadurch gekennzeichnet, dass** das Aufnahmeteil (1) einteilig ausgebildet ist.

6. Verfahren zur Herstellung eines Verbindungselement nach einem der Ansprüche 1 bis 5, **dadurch gekennzeichnet, dass** am aufnahmerichtungsseitigen Ende eines hülsenförmigen Aufnahmeteiles (1) das Material der Wandung des Aufnahmeteils (1) durch einen Bördelvorgang radial nach innen geformt wird und anschliessend durch einen Stempel (10) axial entgegen der Aufnahmerichtung (A), derart aufgestaucht wird, dass sich im Innern des Aufnahmeteils (1) ein Führungsbereich (11) mit geringerem Kerndurchmesser (d3) bildet, der mit einem Innengewinde (12) versehen wird.

## Claims

1. Connector with a housing part (1) for a stud (2) with a male thread (3), [the housing part being] provided with a bore (5) inside which at least one locking element (8) at least partly engaging positively into the male thread (3) of the stud (2) is arranged, wherein
the bore (5) in the housing part (1) has a cylindrical housing region (4) and
the housing part (1) has a guide region (11) adjoining the housing region (4) in the insertion direction (A) of the stud (2), and wherein
the locking element (8) is formed from a radially expandable ring body (8) supported in the insertion direction (A) of the stud (2), the inside diameter (w) [of the ring body] being at least partly smaller than the major diameter (d2) of the male thread (3) and the axial length [of the ring body] approximately corresponding to the length (I) of the housing region (4),
**characterized in that**
at least a portion of the bore (5) adjoining the housing region (4) in the opposite direction to the insertion direction (A) of the stud (2) tapers in the opposite direction to the insertion direction (A) of the stud (2), and
the guide region (11) is provided with a female thread (12) coaxial with the bore (5), the minor thread diameter (d3) of the guide region (11) being no greater than the major thread diameter (d2) of the stud (2).

2. Connector according to Claim 1, **characterized in that** the guide region (11) has a minor thread diameter (d3) that matches the major thread diameter (d2) of the stud (2) and a stop (13) is arranged adjacent thereto in the insertion direction (A).

3. Connector according to Claim 1, **characterized in that** the minor thread diameter (d3) of the female thread (12) is smaller than the major thread diameter (d2) of the stud (2).

4. Connector according to Claim 1 or Claim 2, **characterized in that** the female thread (12) has at least 1.5 turns.

5. Connector according to any one of Claims 1 to 4, **characterized in that** the housing part (1) is made in one piece.

6. Process for the fabrication of a connector according to any one of Claims 1 to 5, **characterized in that** the material of the wall of the housing part (1) is edge-formed radially inwards at the end (in the insertion direction) of a sleeve-like housing part (1) and then upset axially with a punch (10) in the opposite direction to the insertion direction (A) to form in the interior of the housing part (1) a guide region (11) of smaller inside diameter (d3), which is then provided with a female thread (12).

## Revendications

1. Raccord présentant une partie réceptrice (1) pour un boulon (2) doté d'un filet externe (3), qui est pourvue d'un perçage (5), dans lequel est aménagé au moins un élément de verrouillage (8), qui s'engage au moins en partie par adaptation de formes sur le filet externe (3) du boulon (2),
lequel perçage (5) présente dans la partie réceptrice (1) une zone de réception cylindrique (4) et
laquelle partie réceptrice (1) présente une zone de guidage (11) à la suite dans le sens de réception (A) du boulon (2) dans la zone de réception (4) et
lequel élément de verrouillage (8) est formé d'un corps annulaire (8) s'appuyant dans le sens de réception (A) du boulon (2) et s'élargissant radialement, dont la largeur intérieure (w) est au moins en partie inférieure au diamètre externe (d2) du filetage externe (3) et dont la longueur axiale correspond approximativement à la longueur (I) de la zone de réception (4),
**caractérisé en ce que**
le perçage (5) s'amincit à l'encontre du sens de réception (A) du boulon (2) dans la zone de réception (4), puis au moins en partie par segments à l'encontre du sens de réception (A) du boulon (2) et
la zone de guidage (11) est pourvue d'un filet interne (12), qui est aménagé coaxialement au perçage (5), le diamètre (d3) de l'âme de la zone de réception (11) correspondant au maximum au diamètre externe (d2) du boulon (2).

2. Raccord selon la revendication 1, **caractérisé en ce que** la zone de guidage (11) présente une âme d'un diamètre (d3) qui correspond au diamètre externe (d2) du boulon (2) et une butée (13) y est ensuite aménagée dans le sens de réception (A).

3. Raccord selon la revendication 1, **caractérisé en ce que** le diamètre (d3) de l'âme du filet interne (12) est inférieur au diamètre externe (d2) du boulon (2).

4. Raccord selon la revendication 1 ou 2, **caractérisé en ce que** le filet interne (12) présente des pas de filet d'au moins 1,5.

5. Raccord selon l'une quelconque des revendications 1 à 4, **caractérisé en ce que** la partie réceptrice (1) est réalisée d'un seul tenant.

6. Procédé de fabrication d'un raccord selon l'une quelconque des revendications 1 à 5, **caractérisé en ce que** le matériau de la paroi de la partie réceptrice (1) est formé radialement vers l'intérieur à l'extrémité côté sens de réception d'une partie réceptrice en forme de douille (1) par une opération de rabattement, puis refoulé axialement à l'encontre du sens de réception (A) par un poinçon (10) de manière à former, à l'intérieur de la partie réceptrice (1), une zone de guidage (11) ayant un diamètre d'âme plus petit (d3) et un filet interne (12).
